# EUROPEAN PATENT APPLICATION

(11) **EP 4 703 183 A1**
(43) Date of publication of application: **04.03.2026**
(21) Application number: 25195681.9
(22) Date of filing: 13.08.2025
(51) Int. Cl.: B60L 15/20, B60W 50/00

(54) **BATTERY ELECTRIC VEHICLE AND CONTROL METHOD THEREOF**

(30) Priority: 27.08.2024 JP 2024145615
(71) Applicant: TOYOTA JIDOSHA KABUSHIKI KAISHA, Toyota-shi, Aichi-ken 471-8571 (JP)
(72) Inventor: ISAMI, Yoichiro, TOYOTA-SHI, AICHI-KEN, 471-8571 (JP); IMAMURA, Tatsuya, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP); SHIRAI, Joji, TOYOTA-SHI, AICHI-KEN, 471-8571 (JP)
(74) Representative: Cabinet Beau de Loménie

(57) **Abstract**

A battery electric vehicle (100) including an electric motor (6) as a drive source, a controller (101), a first indicator (42, 52), and a second indicator (44, 54) is provided. The first indicator (42, 52) outputs a continuous indication according to an operation amount to the controller (101). The second indicator (44, 54) is operable simultaneously with the first indicator and outputs a continuous indication according to an operation amount to the controller (101). In a state where the second indicator (44, 54) is not being operated, the controller (101) makes the electric motor (6) output a basic torque according to an operation amount of the first indicator (42, 52) and a vehicle speed. The controller (101) switches a change characteristic of the torque between a high-speed characteristic that is selected when the vehicle speed is equal to or higher than a predetermined speed and a low-speed characteristic that is selected when the vehicle speed is lower than the predetermined speed.

## Description

### BACKGROUND OF THE INVENTION

### 1. Field of the Invention

The disclosure relates to a battery electric vehicle having an electric motor as a drive source and to a control method thereof.

### 2. Description of Related Art

Japanese Unexamined Patent Application Publication No. 2024-038489 (JP 2024-038489 A) discloses a related art concerning a battery electric vehicle that can simulatively reproduce actions of a manual-transmission internal combustion engine vehicle having an internal combustion engine as a drive source through control of an electric motor. The battery electric vehicle according to the related art includes, separately from an accelerator pedal, a pseudo-clutch pedal that imitates a clutch pedal of a manual-transmission internal combustion engine vehicle. By operating the pseudo-clutch pedal with his or her left foot while operating the accelerator pedal with his or her right foot, a driver can achieve fine torque control that is impossible in an ordinary battery electric vehicle including only an accelerator pedal.

### SUMMARY OF THE INVENTION

In the case of a manual-transmission internal combustion engine vehicle, a change characteristic of a torque relative to an operation of a clutch pedal is mechanically determined by a pedal stroke-torque capacity characteristic that a clutch mechanism has. On the other hand, in the case where actions of a manual-transmission internal combustion engine vehicle are simulatively reproduced through control of an electric motor, a change characteristic of a torque relative to an operation of a pseudo-clutch pedal can be arbitrarily determined by a program of a controller. While it is possible to program so as to reproduce a pedal stroke-torque capacity characteristic of a manual-transmission internal combustion engine vehicle as is, the characteristic that is mechanically determined in the manual-transmission internal combustion engine vehicle is not necessarily always an optimal characteristic.

Therefore, a battery electric vehicle having an electric motor as a drive source and a control method thereof will be disclosed that can optimize a change characteristic of a torque relative to an operation of a pseudo-clutch pedal or a corresponding indicator according to the situation.

A first aspect of the disclosure relates to a battery electric vehicle including an electric motor as a drive source, a controller, and two indicators that output indications to the controller. The controller is configured to control a torque output by the electric motor. A first indicator of the two indicators is configured to output a continuous indication according to an operation amount to the controller. A second indicator of the two indicators is an indicator that is operable simultaneously with the first indicator and configured to output a continuous indication according to an operation amount to the controller. The controller is configured to, in a state where the second indicator is not being operated, make the electric motor output a basic torque according to an operation amount of the first indicator and a vehicle speed. The controller is configured to, when an operation amount of the second indicator is equal to or larger than a first operation amount, make the electric motor output a predetermined minimum torque. The controller is configured to, when an operation amount of the second indicator is smaller than the first operation amount, increase the torque output by the electric motor from the minimum torque to the basic torque according to a decrease in the operation amount of the second indicator. The controller is configured to switch a change characteristic of the torque between a high-speed characteristic that is selected when the vehicle speed is equal to or higher than a predetermined speed and a low-speed characteristic that is selected when the vehicle speed is lower than the predetermined speed, the change characteristic of the torque being the change characteristic relative to an operation amount of the second indicator when the operation amount of the second indicator is reduced to be smaller than the first operation amount. The high-speed characteristic is a characteristic such that, while the torque increases from the minimum torque to the basic torque, an interval appears where a change in the torque in response to a change in an operation amount of the second indicator becomes convex upward. The low-speed characteristic is a characteristic such that a change in the torque while the torque increases from the minimum torque to the basic torque becomes convex downward in response to a change in an operation amount of the second indicator or the change is linear compared with that in the high-speed characteristic.

A second aspect of the disclosure relates to a control method of the battery electric vehicle including an electric motor as a drive source, a first indicator, and a second indicator. The first indicator is configured to output a continuous indication according to an operation amount. The second indicator is operable simultaneously with the first indicator and configured to output a continuous indication according to an operation amount. The control method involves: (i) controlling a torque output by the electric motor; (ii) in a state where the second indicator is not being operated, making the electric motor output a basic torque according to an operation amount of the first indicator and a vehicle speed; (iii) when an operation amount of the second indicator is equal to or larger than a first operation amount, making the electric motor output a predetermined minimum torque; (iv) when an operation amount of the second indicator is smaller than the first operation amount, increasing the torque from the minimum torque to the basic torque according to a decrease in the operation amount of the second indicator; and (v) switching a change characteristic of the torque between a high-speed characteristic that is selected when the vehicle speed is equal to or higher than a predetermined speed and a low-speed characteristic that is selected when the vehicle speed is lower than the predetermined speed, the change characteristic being the change characteristic relative to an operation amount of the second indicator when the operation amount of the second indicator is reduced to be smaller than the first operation amount. The high-speed characteristic is a characteristic such that, while the torque increases from the minimum torque to the basic torque, an interval appears where a change in the torque in response to a change in an operation amount of the second indicator becomes convex upward. The low-speed characteristic is a characteristic such that a change of the torque while the torque increases from the minimum torque to the basic torque becomes convex downward in response to a change in an operation amount of the second indicator or the change is linear compared with that in the high-speed characteristic.

In the above-described battery electric vehicle and control method thereof, the change characteristic of the torque relative to an operation amount of the second indicator when the operation amount of the second indicator is reduced to be smaller than the first operation amount can be switched based on the vehicle speed. This change characteristic of the torque relative to the operation amount of the second indicator that is thus switched includes the high-speed characteristic that is selected when the vehicle speed is equal to or higher than the predetermined speed and the low-speed characteristic that is selected when the vehicle speed is lower than the predetermined speed.

According to the battery electric vehicle and the control method thereof of the disclosure, the change characteristic of the torque relative to an operation amount of the second indicator is switched according to whether the vehicle speed is equal to or higher than the predetermined speed or lower than the predetermined speed. In the high-speed characteristic that is selected when the vehicle speed is equal to or higher than the predetermined speed, while the torque output by the electric motor increases from the minimum torque to the basic torque, an interval appears where a change in the torque in response to a change in the operation amount of the second indicator becomes convex upward. With this characteristic, a quick rise of the torque allows a driver to feel a direct response to operation. On the other hand, in the low-speed characteristic that is selected when the vehicle speed is lower than the predetermined speed, a change in the torque output by the electric motor while the torque increases from the minimum torque to the basic torque becomes convex downward relative to a change in the operation amount of the second indicator or the change is linear compared with that in the high-speed characteristic. Such a characteristic of the battery electric vehicle can mitigate an excessive change in an acceleration rate due to a rapid change in torque transmission while the speed is low.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view showing the configuration of a battery electric vehicle according to a first embodiment of the disclosure;
FIG. 2 is a view showing a vehicle model that is used in a controller of the battery electric vehicle shown in FIG. 1;
FIG. 3 is a view showing one example of a clutch pedal stroke-clutch capacity characteristic of a clutch model constituting a part of the vehicle model;
FIG. 4A is a view showing an example of setting of the clutch pedal stroke-clutch capacity characteristic;
FIG. 4B is a view showing an example of setting of the clutch pedal stroke-clutch capacity characteristic;
FIG. 4C is a view showing an example of setting of the clutch pedal stroke-clutch capacity characteristic;
FIG. 5 is a view showing a selection flow of the clutch pedal stroke-clutch capacity characteristic by the controller;
FIG. 6 is a view showing one example of switching of the clutch pedal stroke-clutch capacity characteristic in a situation where upshifting is performed after the battery electric vehicle starts, and a result of vehicle control realized by that;
FIG. 7 is a view showing another example of switching of the clutch pedal stroke-clutch capacity characteristic in the situation where upshifting is performed after the battery electric vehicle starts;
FIG. 8 is a view showing one example of switching of the clutch pedal stroke-clutch capacity characteristic in a situation where upshifting is performed and then downshifting is performed after the battery electric vehicle starts, and a result of vehicle control realized by that;
FIG. 9 is a view showing the configuration of a battery electric vehicle according to a second embodiment of the disclosure; and
FIG. 10 is a view showing a vehicle model that is used in a controller of the battery electric vehicle shown in FIG. 9.

### DETAILED DESCRIPTION OF EMBODIMENTS

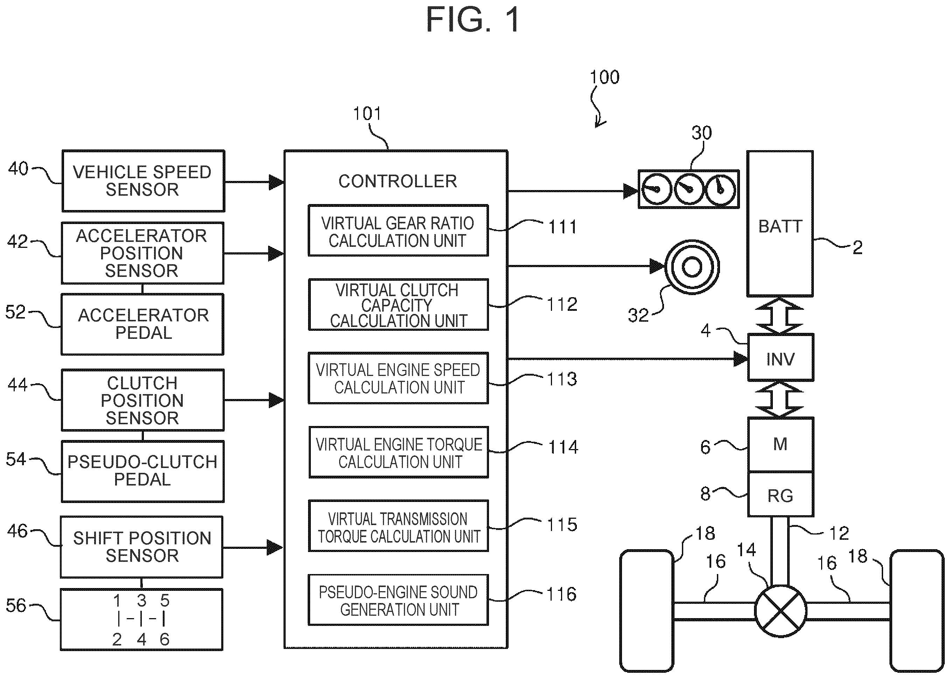

In the following, the configuration of a power system of a vehicle in a first embodiment of the disclosure will be described. FIG. 1 is a view schematically showing the configuration of a vehicle 100 according to the first embodiment of the disclosure. First, the configuration of the power system of the vehicle 100 will be described with reference to FIG. 1.

The vehicle 100 includes an electric motor (M) 6 as a drive source for traveling. The vehicle 100 further includes a battery (BATT) 2 and an inverter (INV) 4. The battery 2 stores electric energy for driving the electric motor 6. Thus, the vehicle 100 is a battery electric vehicle (BEV) that travels on the electric energy stored in the battery 2. The electric motor 6 is, for example, a three-phase alternating-current motor. The inverter 4 is, for example, a voltage-type inverter and controls a torque of the electric motor 6 by PWM control.

An output shaft of the electric motor 6 is connected to a reduction gear (RG) 8. The reduction gear 8 is connected to a differential gear 14 by a propeller shaft 12. The differential gear 14 is connected to right and left drive wheels 18 by right and left driveshafts 16. The drive wheels 18 may be rear wheels or may be front wheels. The vehicle 100 may be configured as an all-wheel-drive vehicle. In that case, a center differential gear may be provided on the propeller shaft 12 to transmit a drive torque divided by the center differential gear to each of the front wheels and the rear wheels.

Next, the configuration of a control system of the vehicle 100 in the first embodiment will be described with reference to FIG. 1.

The vehicle 100 includes a vehicle speed sensor 40. The vehicle speed sensor 40 is a sensor that outputs a signal according to a traveling speed of the vehicle 100 (hereinafter referred to as a "vehicle speed"). At least one of wheel speed sensors (not shown) that are respectively provided on the right and left front wheels and the right and left rear wheels is used as the vehicle speed sensor 40.

The vehicle 100 further includes an accelerator position sensor 42. The accelerator position sensor 42 is a sensor that is provided in an accelerator pedal 52 and outputs a signal according to an operation amount of the accelerator pedal 52. The operation amount of the accelerator pedal 52 means an amount that a driver presses down the accelerator pedal 52, i.e., an accelerator operation amount.

The accelerator pedal 52 is a driving operation member used for driving the vehicle 100. Other than the accelerator pedal 52, driving operation members include a brake pedal (not shown). Separately from these driving operation members, the vehicle 100 includes pseudo-gear change operation members that imitate operation members used for a gear change operation in a manual-transmission internal combustion engine vehicle. The pseudo-gear change operation members include a pseudo-clutch pedal 54 and a pseudo-shifter 56 to be described below.

The pseudo-clutch pedal 54 is a dummy different from an original clutch pedal. The pseudo-clutch pedal 54 has a structure resembling a clutch pedal included in a conventional manual-transmission internal combustion engine vehicle. For example, the pseudo-clutch pedal 54 includes a reaction force mechanism that generates a reaction force in response to the driver's pressing down. A position when no pressing force is applied is a starting end position of the pseudo-clutch pedal 54, and a position when it is pressed down to a farthest point is a terminal end position of the pseudo-clutch pedal 54. The driver can operate the pseudo-clutch pedal 54 from the starting end position to the terminal end position against the reaction force from the reaction force mechanism.

The vehicle 100 includes a clutch position sensor 44. The clutch position sensor 44 is a sensor that is provided in the pseudo-clutch pedal 54 and outputs a signal according to an operation amount of the pseudo-clutch pedal 54. The operation amount of the pseudo-clutch pedal 54 means an amount that the driver presses down the pseudo-clutch pedal 54, i.e., a clutch pedal stroke.

The pseudo-shifter 56 is a dummy different from an original shifter. The pseudo-shifter 56 has a structure resembling an H-type shifter included in a conventional manual-transmission internal combustion engine vehicle. The pseudo-shifter 56 has a shift lever, and this lever can be moved along H-type gates. A shift position is allocated to each gate. However, since the vehicle 100 does not include a real transmission, the shift positions of the pseudo-shifter 56 are virtual shift positions. In the example shown in FIG. 1, as the virtual shift positions, first gear, second gear, third gear, fourth gear, fifth gear, and sixth gear are provided. In a conventional manual-transmission internal combustion engine vehicle, first gear is a shift position with the highest gear ratio, and the gear ratio becomes lower in the order of second gear, third gear, fourth gear, fifth gear, and sixth gear.

The vehicle 100 includes a shift position sensor 46. The shift position sensor 46 is a sensor that is provided in the pseudo-shifter 56 and outputs a signal indicating a shift position selected by the pseudo-shifter 56. When the shift lever is in none of the shift positions, the shift position sensor 46 outputs a signal indicating a neutral position.

The vehicle 100 includes a controller 101. Sensors and control target devices installed in the vehicle 100 are connected to the controller 101 by an in-vehicle network. The vehicle speed sensor 40, the accelerator position sensor 42, the clutch position sensor 44, and the shift position sensor 46 are some examples of the sensors installed in the vehicle 100. The signals of these sensors 40, 42, 44, 46 are input into the controller 101.

The controller 101 is typically an electronic control unit (ECU). The controller 101 may be a combination of a plurality of ECUs. The controller 101 includes an interface, a memory, and a processor (none of which is shown). The in-vehicle network is connected to the interface. The memory includes an RAM that temporarily records data and an ROM that stores programs that are executable in the processor and various pieces of data relating to the programs. Each program is composed of a plurality of instructions. The processor retrieves programs and data from the memory and executes them, and generates control signals based on signals acquired from the sensors. The number of the processors included in the controller 101 may be one or more than one. The one or more processors constitute a processing circuit.

Next, functions of the controller of the vehicle in the first embodiment will be described. The programs stored in the memory of the controller 101 include a program that enables the vehicle 100 to be operated like a manual-transmission internal combustion engine vehicle. In this program, a vehicle model that is modeled on a manual-transmission internal combustion engine vehicle is incorporated. As this program is executed, the processor or the processor group of the controller 101 functions as a virtual gear ratio calculation unit 111, a virtual clutch capacity calculation unit 112, a virtual engine speed calculation unit 113, a virtual engine torque calculation unit 114, a virtual transmission torque calculation unit 115, and a pseudo-engine sound generation unit 116.

The virtual gear ratio calculation unit 111 acquires the signal of the shift position sensor 46. From the signal of the shift position sensor 46, a virtual shift position of the pseudo-shifter 56 is obtained. The virtual gear ratio calculation unit 111 calculates a virtual gear ratio of the vehicle 100 based on the virtual shift position using a transmission model, to be described later, that constitutes a part of the vehicle model. The virtual gear ratio is a gear ratio of a transmission that is virtually realized through torque control of the electric motor 6 using the vehicle model (hereinafter referred to as a "virtual transmission").

The virtual clutch capacity calculation unit 112 acquires the signal of the clutch position sensor 44. From the signal of the clutch position sensor 44, a clutch pedal stroke of the pseudo-clutch pedal 54 is obtained. The virtual clutch capacity calculation unit 112 calculates a virtual clutch capacity based on the clutch pedal stroke using a clutch model, to be described later, that constitutes a part of the vehicle model. The virtual clutch capacity is a torque transmission capacity of a clutch that is virtually realized through the torque control of the electric motor 6 using the vehicle model (hereinafter referred to as a "virtual clutch").

The virtual engine speed calculation unit 113 acquires the signal of the vehicle speed sensor 40. From the signal of the vehicle speed sensor 40, the vehicle speed of the vehicle 100 is obtained. The virtual engine speed calculation unit 113 calculates a virtual engine speed based on the vehicle speed and the virtual gear ratio according to a predetermined calculation formula. The virtual engine speed is a rotation speed of an engine that is virtually realized through the torque control of the electric motor 6 using the vehicle model (hereinafter referred to as a "virtual engine"). When the virtual clutch is in a half-engaged state, the virtual engine speed is calculated using the vehicle speed, the virtual gear ratio, and a virtual slip ratio. The virtual slip ratio is calculated using the virtual clutch capacity and a virtual engine torque to be described later.

The virtual engine torque calculation unit 114 acquires the signal of the accelerator position sensor 42. From the signal of the accelerator position sensor 42, the accelerator operation amount of the accelerator pedal 52 is obtained. The virtual engine torque calculation unit 114 calculates a virtual engine torque based on the virtual engine speed and the accelerator operation amount using an engine model, to be described later, that constitutes a part of the vehicle model. The virtual engine torque is a torque output from the virtual engine.

The virtual transmission torque calculation unit 115 calculates a virtual transmission torque using the virtual engine torque, the virtual clutch capacity, and the virtual gear ratio. The virtual transmission torque is a torque output from the virtual transmission. The virtual transmission torque is a product of the virtual clutch torque input from the virtual clutch and the gear ratio, and the virtual clutch torque is a torque of the virtual engine torque or the virtual clutch capacity, whichever is lower. That is, when the virtual engine torque is lower than the virtual clutch capacity, the virtual clutch torque is equal to the virtual engine torque. On the other hand, when the virtual engine torque is higher than the virtual clutch capacity, the virtual clutch torque is restricted to the virtual clutch capacity.

The controller 101 controls the inverter 4 such that the torque output by the electric motor 6 changes according to the virtual transmission torque. The virtual transmission torque changes discontinuously according to switching of the virtual gear ratio. This discontinuous change in the virtual transmission torque causes a change in behavior of the vehicle 100 and creates likeness of a vehicle including a stepped transmission.

The virtual engine speed and the virtual engine torque are input into a display device 30 that is provided in an instrument panel of the vehicle 100. The display device 30 displays a pseudo-engine speed meter, a pseudo-engine torque meter, and a pseudo-engine power meter. These meters may be analog meters or may be digital meters. The pseudo-engine speed meter displays the virtual engine speed. The pseudo-engine torque meter displays the virtual engine torque. The pseudo-engine power meter displays virtual engine power that is calculated from the virtual engine speed and the virtual engine torque. Display contents of these meters change according to the driver's operation of the accelerator pedal 52, as well as change according to operation of the pseudo-clutch pedal 54 and operation of the pseudo-shifter 56. By looking at the meters that thus change, the driver visually feels a sensation as if driving a manual-transmission internal combustion engine vehicle.

The pseudo-engine sound generation unit 116 generates a pseudo-engine sound to be output by a speaker 32 that is installed inside a vehicle cabin of the vehicle 100. The pseudo-engine sound generation unit 116 calculates a sound pressure of the pseudo-engine sound using a sound pressure map, and calculates a frequency of the pseudo-engine sound using a frequency map. In the sound pressure map, sound pressure data is set relative to the virtual engine speed such that, as the virtual engine speed becomes higher, the sound pressure also becomes higher. The sound pressure data is set relative to the virtual engine torque such that, as the virtual engine torque becomes higher, the sound pressure also becomes higher. In the frequency map, frequency data is set relative to the virtual engine speed such that, as the virtual engine speed becomes higher, the frequency also becomes higher. Therefore, the sound pressure and the frequency of the pseudo-engine sound generated from the speaker change according to the driver's operation of the accelerator pedal 52, as well as change according to operation of the pseudo-clutch pedal 54 and operation of the pseudo-shifter 56. By hearing the pseudo-engine sound of which the sound pressure and the frequency thus change, the driver auditorily feels a sensation as if driving a manual-transmission internal combustion engine vehicle.

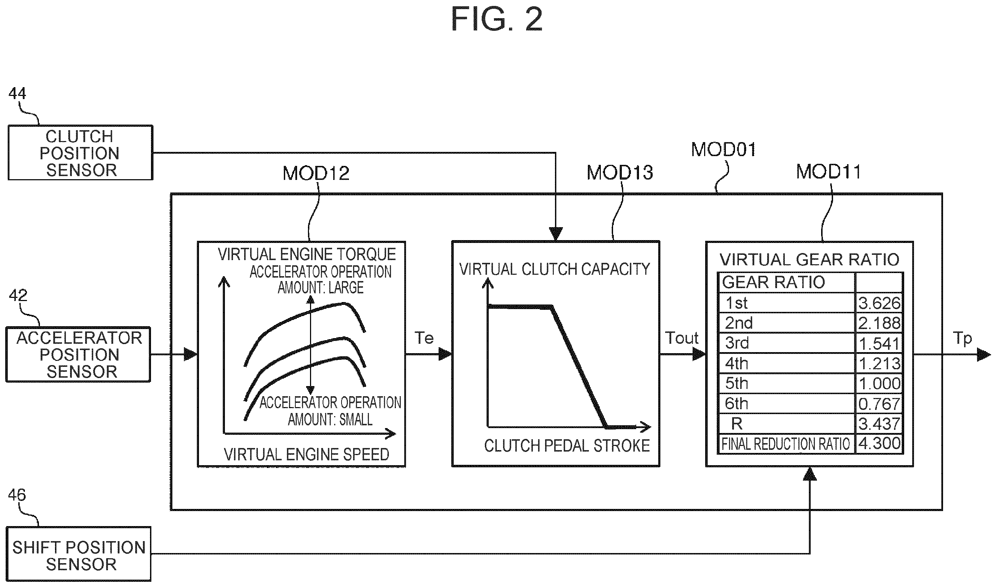

Here, the vehicle model that the controller 101 uses will be described with reference to FIG. 2. As shown in FIG. 2, a vehicle model MOD01 is composed of a transmission model MOD11, an engine model MOD12, and a clutch model MOD13. The transmission model MOD11 is modeled on the virtual transmission. The engine model MOD12 is modeled on the virtual engine. The clutch model MOD13 is modeled on the virtual clutch.

In the engine model MOD12, a relationship between the virtual engine speed and the virtual engine torque is specified for each accelerator operation amount. A torque characteristic of the engine model MOD12 can be set to a characteristic based on an assumption of a gasoline engine as well as to a characteristic based on an assumption of a diesel engine. It can also be set to a characteristic based on an assumption of a naturally aspirated engine as well as to a characteristic based on an assumption of a supercharged engine. A virtual engine torque Te calculated in the engine model MOD12 is input into the clutch model MOD13. When the virtual engine speed has decreased to or below a predetermined engine stall speed, the virtual engine torque is set to zero after extremely short-time fluctuations, and the virtual engine speed is also reduced to zero.

In the clutch model MOD13, the virtual clutch capacity is given to the clutch pedal stroke. The clutch pedal stroke is 0% at the starting end position of the pseudo-clutch pedal 54 and reaches 100% at the terminal end position of the pseudo-clutch pedal 54. The virtual clutch capacity when the clutch pedal stroke is 100% is zero. In this case, the virtual clutch is completely released in the clutch model MOD13, so that transmission of the virtual engine torque from the virtual engine to the virtual transmission is interrupted. When the clutch pedal stroke is returned from the state of 100%, the state of the virtual clutch changes from a released state to a half-engaged state at a predetermined position (this position will be referred to as a "clutch meeting point"). As a result, the virtual clutch capacity starts to increase, and with that transmission of the virtual engine torque from the virtual engine to the virtual transmission starts. When the virtual clutch capacity becomes equal to or higher than the virtual engine torque, the state of the virtual clutch becomes an engaged state, so that the entire virtual engine torque output from the virtual engine is input into the virtual transmission.

In the transmission model MOD11, the virtual gear ratio is set for each virtual shift position. For first gear, a highest virtual gear ratio is set, and the virtual gear ratio becomes lower in the order of second gear, third gear, fourth gear, fifth gear, and sixth gear. A virtual transmission torque Tp is calculated using the virtual gear ratio calculated in the transmission model MOD11 and the virtual clutch torque Tout input from the clutch model MOD13.

According to the vehicle model MOD01 thus configured, the virtual transmission torque Tp changes according to the accelerator operation amount as well as changes according to the clutch pedal stroke. When the clutch pedal stroke is equal to or larger than the clutch meeting point at which the state of the virtual clutch changes from the released state to the half-engaged state, the virtual transmission torque Tp becomes minimum. This minimum torque may be set to zero, or may be set to a value larger than zero like a creep torque of an automatic transmission. When the clutch pedal stroke becomes smaller than the clutch meeting point, the virtual transmission torque Tp increases from the minimum torque to the virtual engine torque Te according to a decrease in the clutch pedal stroke.

Next, details of the clutch model of the vehicle in the first embodiment will be described. In an actual clutch included in a manual-transmission internal combustion engine vehicle, a clutch capacity is mechanically determined by a spring force, a disc diameter, the number of discs, a friction coefficient, etc. A clutch pedal stroke is also mechanically determined by a disc-to-disc distance. In the actual clutch, therefore, a characteristic of a change in the clutch capacity in response to a change in the clutch pedal stroke is also mechanically determined, and this characteristic remains basically constant except for changes due to aging through usage.

On the other hand, according to the virtual clutch realized by the clutch model MOD13, it is also possible to make a clutch pedal stroke-clutch capacity characteristic variable by programming of the clutch model MOD13. One advantage of using the clutch model MOD13 for the calculation of the torque output from the electric motor 6 is that, in various situations where a clutch operation is required, the clutch pedal stroke-clutch capacity characteristic can be optimized according to the situation.

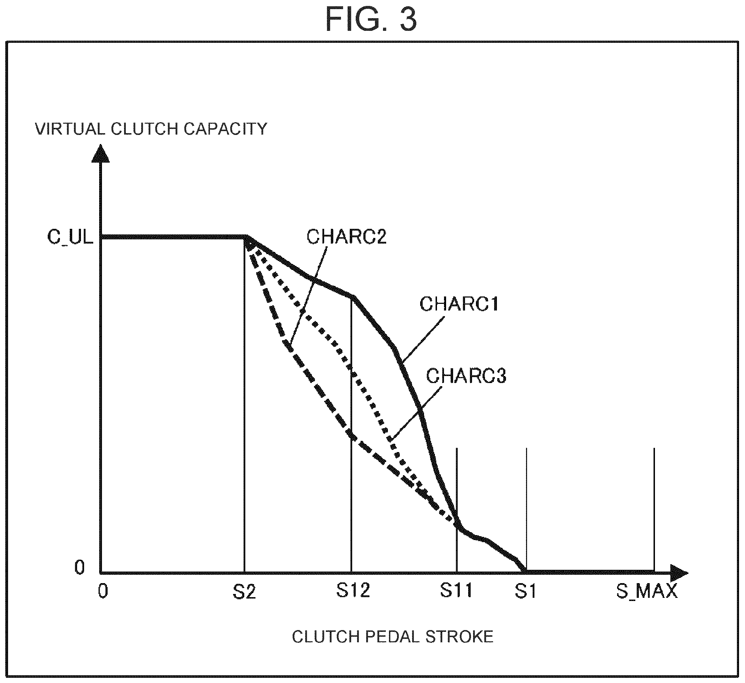

FIG. 3 is a view showing one example of the clutch pedal stroke-clutch capacity characteristic (hereinafter referred to simply as a "clutch capacity characteristic") that is set in the clutch model MOD13. In this example, as the clutch capacity characteristic, a first high-speed characteristic CHARC1, a low-speed characteristic CHARC2, and a second high-speed characteristic CHARC3 are set in the clutch model MOD13. In each of the characteristics CHARC1, CHARC2, CHARC3, the virtual clutch switches from the released state to the half-engaged state at a point S1 that is the clutch meeting point. Moreover, in each of the characteristics CHARC1, CHARC2, CHARC3, the virtual clutch reaches an upper limit value C_UL of the virtual clutch capacity at a point S2 that is a full engagement point. The point S1 may be called a first operation amount of the pseudo-clutch pedal 54, and the point S2 may be called a second operation amount of the pseudo-clutch pedal 54.

In the clutch model MOD13, the three characteristics CHARC1, CHARC2, CHARC3 are switched according to the situation. The first high-speed characteristic CHARC1 and the second high-speed characteristic CHARC3 are clutch capacity characteristics that are selected when the vehicle speed is equal to or higher than a predetermined speed. The low-speed characteristic CHARC2 is a clutch capacity characteristic that is selected when the vehicle speed is lower than the predetermined speed. The predetermined speed serving as a criterion for switching is a speed for determining whether the vehicle 100 is starting, and is set to, for example, 5 km/h. Determination of switching of the clutch capacity characteristic is performed based on the vehicle speed at a point when the pseudo-clutch pedal 54 is operated. Therefore, in a state where the pseudo-clutch pedal 54 is being operated, even when the vehicle speed has changed from below the predetermined speed to the predetermined speed or above, and even when the vehicle speed has changed from the predetermined speed or above to below the predetermined speed, switching of the clutch capacity characteristic is not performed.

Of the first high-speed characteristic CHARC1 and the second high-speed characteristic CHARC3, the clutch capacity characteristic that is basically selected when the vehicle speed is equal to or higher than the predetermined speed is the first high-speed characteristic CHARC1. The second high-speed characteristic CHARC3 is selected only when the pseudo-shifter 56 is operated while the pseudo-clutch pedal 54 is operated and that operation is downshifting. When the pseudo-shifter 56 is not operated and when the operation of the pseudo-shifter 56 is upshifting, the first high-speed characteristic CHARC1 that is the basic clutch capacity characteristic is selected.

The three characteristics CHARC1, CHARC2, CHARC3 are different from one another in how the virtual clutch capacity changes in response to a change in the clutch pedal stroke in an interval from the point S1 to the point S2. The first high-speed characteristic CHARC1 is a characteristic such that, while the clutch pedal stroke changes from the point S1 to the point S2, an interval appears where the change in the virtual clutch capacity in response to the change in the clutch pedal stroke becomes convex upward. In the example shown in FIG. 3, this characteristic is such that, from a point S11 that is a little on an engagement side with respect to the point S1 to the point S2, the change in the virtual clutch capacity in response to the change in the clutch pedal stroke becomes convex upward.

The low-speed characteristic CHARC2 is a characteristic such that, while the clutch pedal stroke changes from the point S1 to the point S2, the virtual clutch capacity changes from zero that is a minimum value to the upper limit value C_UL so as to become convex downward or linear compared with that in the first high-speed characteristic CHARC1. In the example shown in FIG. 3, this characteristic is such that, from the point S11 to the point S2, the change in the virtual clutch capacity in response to the change in the clutch pedal stroke becomes convex downward. However, the change in the virtual clutch capacity from the point S1 to the point S11 in the low-speed characteristic CHARC2 is the same as that in the first high-speed characteristic CHARC1.

The second high-speed characteristic CHARC3 is a characteristic in which a change rate of the virtual clutch capacity relative to the clutch pedal stroke when the clutch pedal stroke is reduced from that at the point S1 is set to be lower than the change rate in the first high-speed characteristic CHARC1. In the example shown in FIG. 3, this characteristic is such that, from the point S11 to the point S2, the change in the virtual clutch capacity in response to the change in the clutch pedal stroke becomes linear compared with that in the first high-speed characteristic CHARC1. However, the change in the virtual clutch capacity from the point S1 to the point S11 in the second high-speed characteristic CHARC3 is the same as that in the first high-speed characteristic CHARC1.

Switching the clutch capacity characteristic of the clutch model MOD13 as described above is equivalent to switching the change characteristic of the torque output by the electric motor 6 relative to the clutch pedal stroke. The interval from the point S1 to the point S12 in the example shown in FIG. 3 is an interval at an initial stage of engagement of the virtual clutch, and corresponds to an interval where the torque output by the electric motor 6 starts to rise. The change characteristic of the torque relative to the clutch pedal stroke in this interval has an especially significant influence on the driving feeling.

When the first high-speed characteristic CHARC1 has been selected, the virtual clutch exhibits a quick engagement response to a returning operation of the pseudo-clutch pedal 54. The resulting quick rise of the torque allows the driver to feel a direct response to the operation. When an operation of the pseudo-clutch pedal 54 is performed in combination with a shifting operation of the pseudo-shifter 56, the driver can enjoy a brisk gear change.

When the low-speed characteristic CHARC2 has been selected, the virtual clutch exhibits a slow engagement response to a returning operation of the pseudo-clutch pedal 54. As a result, the rise of the torque in response to an operation of the pseudo-clutch pedal 54 is restrained, which makes it easier for the driver to perform a half-clutch operation at the time of starting the vehicle. As the half-clutch operation is made easier, the likelihood of pseudo-engine stall due to the virtual engine speed decreasing to or below the engine stall speed can be reduced.

When the second high-speed characteristic CHARC3 has been selected, the virtual clutch exhibits a slower engagement response to a returning operation of the pseudo-clutch pedal 54 than when the first high-speed characteristic CHARC1 has been selected. The virtual engine speed increases during downshifting of the virtual transmission by an operation of the pseudo-shifter 56. However, as the engagement response of the virtual clutch to the operation of the pseudo-clutch pedal 54 is restrained, the speed of increase in the virtual engine speed is also restrained, which can mitigate surge shock accompanying engine braking.

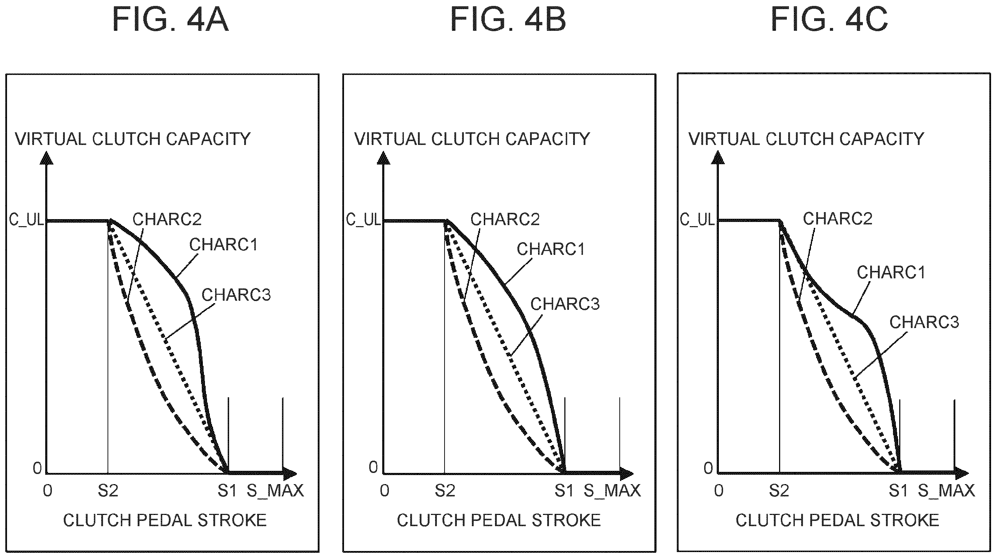

Depending on its programming, the clutch model MOD13 allows clutch capacity characteristics other than the examples shown in FIG. 3 to be set. FIG. 4A, FIG. 4B, and FIG. 4C show examples of settings of the clutch capacity characteristic. The low-speed characteristic CHARC2 and the second high-speed characteristic CHARC3 are common to all the examples. In the low-speed characteristic CHARC2, the virtual clutch capacity changes from zero to the upper limit value C_UL so as to become convex downward in response to the change in the clutch pedal stroke from the point S1 to the point S2. In the second high-speed characteristic CHARC3, the virtual clutch capacity changes linearly from zero to the upper limit value C_UL in response to the change in the clutch pedal stroke from the point S1 to the point S2.

In the high-speed characteristic CHARC1 shown in FIG. 4A, the virtual clutch capacity changes from zero toward the upper limit value C_UL so as to become convex downward and then convex upward in response to the change in the clutch pedal stroke from the point S1 to the point S2. In the first high-speed characteristic CHARC1 shown in FIG. 4B, the virtual clutch capacity changes from zero toward the upper limit value C_UL so as to become convex upward as a whole in response to the change in the clutch pedal stroke from the point S1 to the point S2. In the high-speed characteristic CHARC1 shown in FIG. 4C, the virtual clutch capacity changes from zero toward the upper limit value C_UL so as to become convex upward and then convex downward in response to the change in the clutch pedal stroke from the point S1 to the point S2. With any one of the settings of FIGS. 4A to 4C, the torque can be raised quickly in response to an operation of the pseudo-clutch pedal 54.

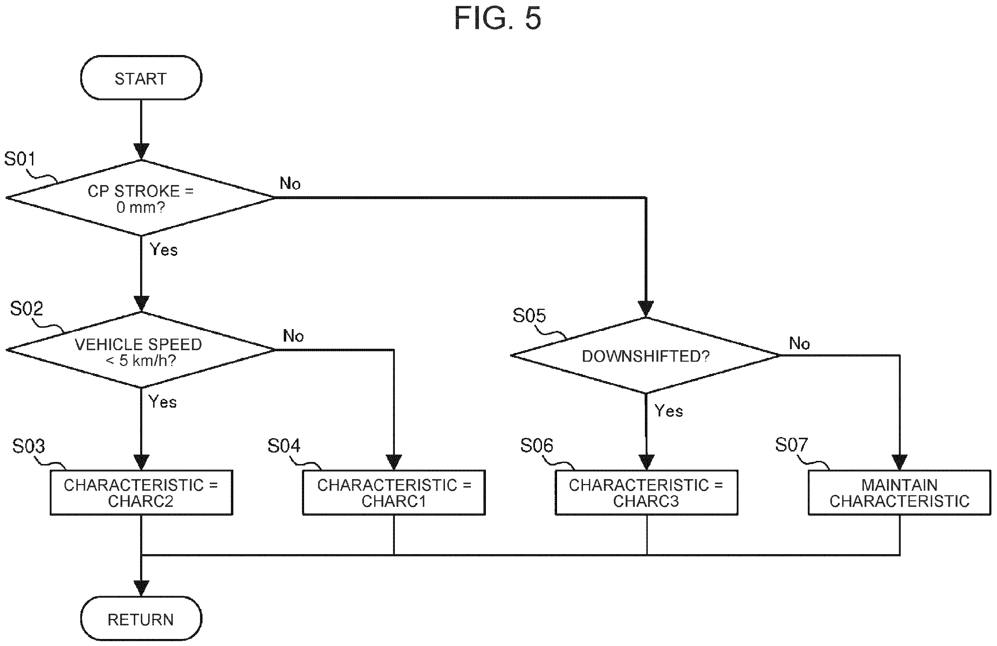

Next, vehicle control using the clutch model of the vehicle in the first embodiment will be described. The vehicle control using the above-described clutch model MOD13 will be described. The controller 101 selects the three characteristics CHARC1, CHARC2, and CHARC3 of the clutch model MOD13 according to the selection flow shown in FIG. 5. First, the controller 101 selects either the first high-speed characteristic CHARC1 or the low-speed characteristic CHARC2 based on the vehicle speed at a point of starting the selection flow. The selection flow is started at a point when switching is performed from an EV mode in which the vehicle 100 is controlled as an ordinally battery electric vehicle to an MT mode in which the vehicle 100 is controlled so as to simulate a manual-transmission internal combustion engine vehicle. For example, when switching from the EV mode to the MT mode is performed while the vehicle 100 is stationary, the low-speed characteristic CHARC2 is selected as the clutch capacity characteristic. When switching from the EV mode to the MT mode is performed during travel at 5 km/h or above, the first high-speed characteristic CHARC1 is selected as the clutch capacity characteristic.

After the selection flow is started, in step S01, it is determined whether the clutch pedal stroke is 0 mm, i.e., whether the pseudo-clutch pedal 54 is being operated. When the pseudo-clutch pedal 54 is not being operated, step S02 is executed. When the pseudo-clutch pedal 54 is being operated, step S05 is executed.

In step S02, it is determined whether the vehicle speed is lower than 5 km/h. When the vehicle speed is lower than 5 km/h, step S03 is executed and the low-speed characteristic CHARC2 is selected. When the vehicle speed is equal to or higher than 5 km/h, step S04 is executed and the first high-speed characteristic CHARC1 is selected.

In step S05, it is determined whether downshifting of the virtual transmission has been performed by an operation of the pseudo-shifter 56. When downshifting has been performed, step S06 is executed and the second high-speed characteristic CHARC3 is selected. When downshifting has not been performed, step S07 is executed and the clutch capacity characteristic that is currently selected is maintained as is.

As the selection among the three characteristics CHARC1, CHARC2, CHARC3 is performed according to the above-described selection flow, vehicle control as illustrated below is realized.

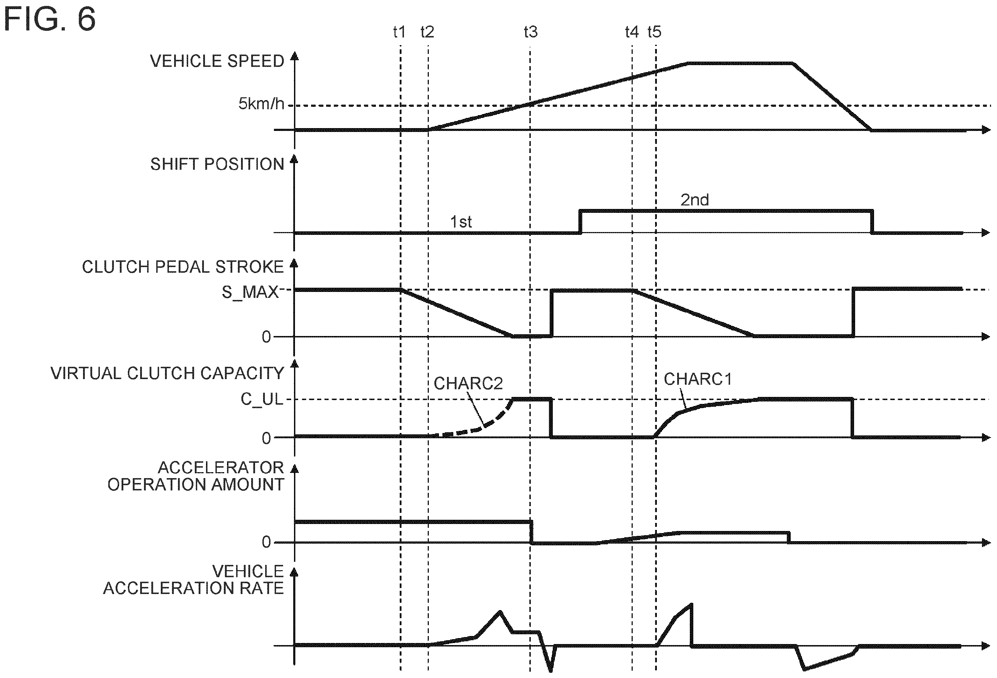

FIG. 6 is a view showing one example of switching of the clutch capacity characteristic in a situation where upshifting is performed after the vehicle 100 starts, and a result of vehicle control realized by that. In this example, as an initial state, the vehicle 100 is stationary. In this state, the accelerator pedal 52 has been pressed to a certain degree, and the pseudo-clutch pedal 54 has been pressed down until the clutch pedal stroke reaches a maximum value S_MAX.

When the pseudo-clutch pedal 54 starts to be returned at time t1, the clutch pedal stroke reaches the clutch meeting point at time t2, and the virtual clutch capacity starts to increase. In this case, the virtual clutch capacity increases slowly according to the low-speed characteristic CHARC2 that has been selected in the initial state. As the increase in the virtual clutch capacity is restrained, a rapid change in a vehicle acceleration rate is restrained. As the clutch pedal stroke approaches zero, the virtual clutch capacity approaches the upper limit value C_UL, and eventually the virtual clutch becomes fully engaged.

As the virtual clutch becomes engaged, the vehicle 100 starts and the vehicle speed increases. At time t3, the vehicle speed reaches 5 km/h. In this case, since the pseudo-clutch pedal 54 has been fully returned and the clutch pedal stroke is zero, the clutch capacity characteristic is switched from the low-speed characteristic CHARC2 to the first high-speed characteristic CHARC1.

Thereafter, the pseudo-clutch pedal 54 is pressed down again, and the shift position of the virtual transmission is changed from first gear to second gear by a shifting operation of the pseudo-shifter 56. When the pseudo-clutch pedal 54 starts to be returned at time t4, the clutch pedal stroke reaches the clutch meeting point at time t5, and the virtual clutch capacity starts to increase. In this case, the virtual clutch capacity rises quickly according to the first high-speed characteristic CHARC1. As the virtual clutch capacity rises quickly, the vehicle acceleration rate increases rapidly, which allows the driver to feel a direct response to the operation. As the clutch pedal stroke approaches zero, the virtual clutch capacity approaches the upper limit value C_UL, and eventually the virtual clutch becomes fully engaged. Thus, upshifting from first gear to second gear is completed.

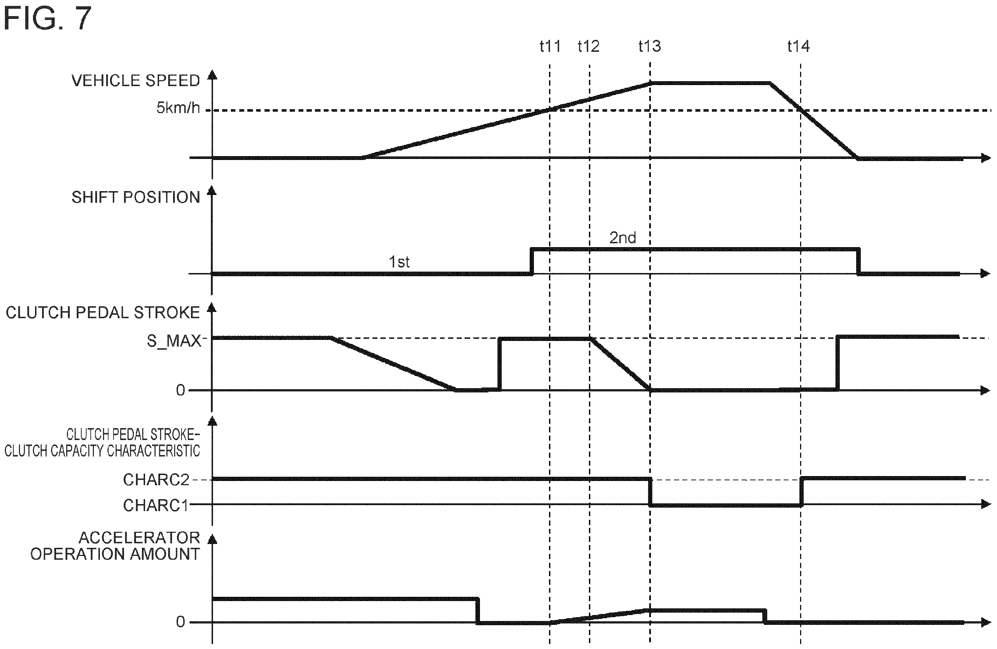

FIG. 7 shows another example of switching of the clutch capacity characteristic in the situation where upshifting is performed after the vehicle 100 starts. Also in this example, as in the example shown in FIG. 6, an operation of the pseudo-clutch pedal 54 is performed twice, once at the time when the vehicle 100 starts and once at the time of the subsequent upshifting. For the operation of the pseudo-clutch pedal 54 at the time of starting, the low-speed characteristic CHARC2 that has been selected in the initial state is used as the clutch capacity characteristic.

After the vehicle 100 starts, the vehicle speed reaches 5 km/h at time t11. In this example, however, the pseudo-clutch pedal 54 has been pressed down for upshifting. Therefore, even when the vehicle speed has become equal to or higher than 5 km/h, switching of the clutch capacity characteristic from the low-speed characteristic CHARC2 to the first high-speed characteristic CHARC1 is not performed, and the low-speed characteristic CHARC2 is maintained as is.

When the pseudo-clutch pedal 54 starts to be returned at time t12, the clutch pedal stroke reaches the clutch meeting point and the virtual clutch capacity starts to increase. The change in the virtual clutch capacity in this case follows the low-speed characteristic CHARC2. Switching from the low-speed characteristic CHARC2 to the first high-speed characteristic CHARC1 is performed at time t13 when the clutch pedal stroke has reached zero. Thereafter, the vehicle speed decreases to below 5 km/h at time t14, but since the clutch pedal stroke at that time is zero, switching from the first high-speed characteristic CHARC1 to the low-speed characteristic CHARC2 is performed.

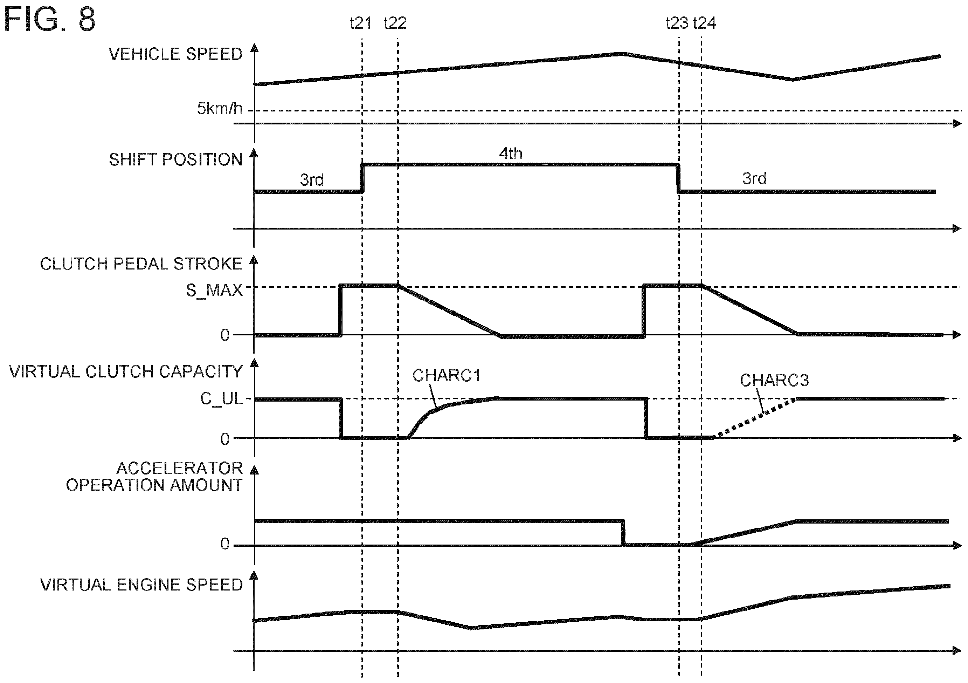

FIG. 8 is a view showing one example of switching of the clutch capacity characteristic in a situation where downshifting is performed after upshifting, and a result of vehicle control realized by that. In this example, as an initial state, the vehicle 100 is traveling at 5 km/h or above.

In a state where 5 km/h or above is maintained, the pseudo-clutch pedal 54 is pressed down, and the pseudo-shifter 56 is operated at time t21 to change the shift position of the virtual transmission from third gear to fourth gear. When the pseudo-clutch pedal 54 starts to be returned at time t22, the clutch pedal stroke reaches the clutch meeting point and the virtual clutch capacity starts to increase. In this case, the virtual clutch capacity rises quickly according to the first high-speed characteristic CHARC1. As the virtual clutch capacity rises quickly, the vehicle acceleration rate increases rapidly, which allows the driver to feel a direct response to the operation. As the clutch pedal stroke approaches zero, the virtual clutch capacity approaches the upper limit value C_UL, and eventually the virtual clutch becomes fully engaged. Thus, upshifting from third gear to fourth gear is completed.

Thereafter, the pseudo-clutch pedal 54 is pressed down again in the state where 5 km/h or above is maintained, and the pseudo-shifter 56 is operated at time t23 to change the shift position of the virtual transmission from fourth gear to third gear. This operation causes the clutch capacity characteristic to be switched from the first high-speed characteristic CHARC1 to the second high-speed characteristic CHARC3. When the pseudo-clutch pedal 54 starts to be returned at time t24, the clutch pedal stroke reaches the clutch meeting point, and the virtual clutch capacity starts to increase. In this case, the virtual clutch capacity rises relatively slowly according to the second high-speed characteristic CHARC3. As the virtual clutch capacity rises relatively slowly, a rapid increase in the virtual engine speed due to engine braking is restrained. As the clutch pedal stroke approaches zero, the virtual clutch capacity approaches the upper limit value C_UL, and eventually the virtual clutch becomes fully engaged. Thus, downshifting from fourth gear to third gear is completed.

Next, the configuration of a power system of a vehicle in a second embodiment of the disclosure will be described. In the first embodiment, the virtual engine, the virtual clutch, and the virtual transmission are realized through the torque control of the electric motor to reproduce the actions of a manual-transmission internal combustion engine vehicle in the battery electric vehicle. Reproducing the actions of a manual-transmission internal combustion engine vehicle can be realized also in a battery electric vehicle in which an electric motor is combined with a real transmission.

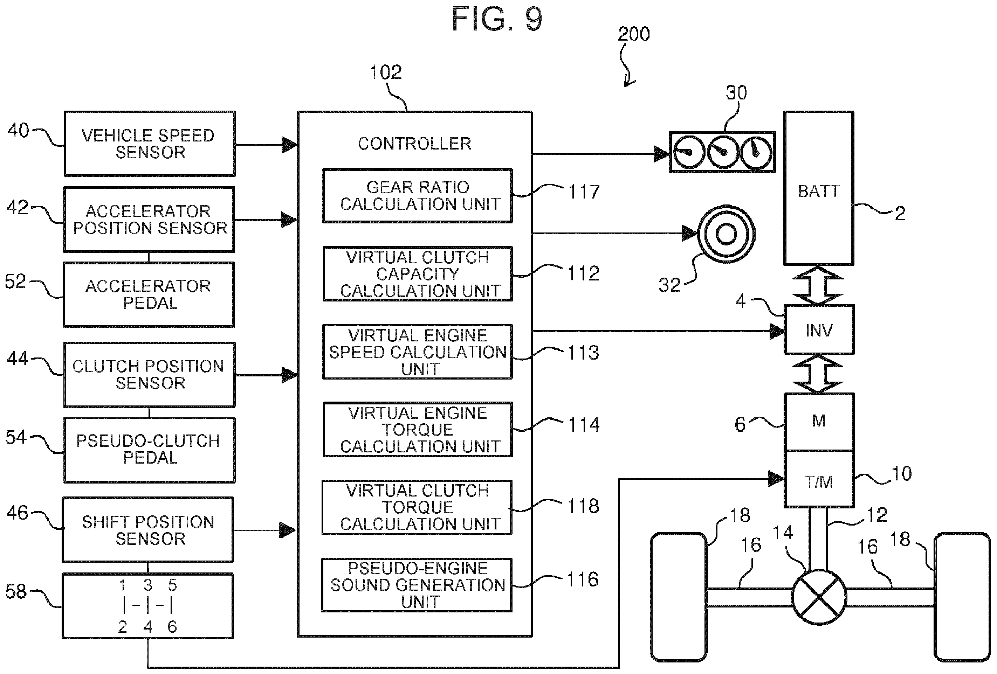

FIG. 9 is a view schematically showing the configuration of a vehicle 200 according to the second embodiment of the disclosure. In FIG. 9, elements that are the same as in the vehicle 100 according to the first embodiment are denoted by the same reference signs. The vehicle 200 is a battery electric vehicle that supplies electric energy stored in the battery 2 to the electric motor 6 by controlling the inverter 4, and travels by driving the drive wheels 18 by the electric motor 6. The vehicle 200 includes a transmission (T/M) 10. The output shaft of the electric motor 6 is connected to the transmission 10. The transmission 10 is a stepped transmission having a plurality of gear stages that is switchable. Switching among the gear stages of the transmission 10 is performed by the driver's manual operation of a shifter 58. The shifter 58 is, for example, an H-type shifter, and a shift lever can be moved along H-shaped gates. The shifter 58 may be mechanically connected to the transmission 10, or may be connected to the transmission 10 by a wire. The transmission 10 is connected to the differential gear 14 by the propeller shaft 12.

A controller 102 of the vehicle 200 includes a gear ratio calculation unit 117, the virtual clutch capacity calculation unit 112, the virtual engine speed calculation unit 113, the virtual engine torque calculation unit 114, a virtual clutch torque calculation unit 118, and the pseudo-engine sound generation unit 116. These calculation units are virtually realized as programs stored in a memory of the controller 102 are executed by processors or a processor group. Of these units, the virtual clutch capacity calculation unit 112, the virtual engine speed calculation unit 113, the virtual engine torque calculation unit 114, and the pseudo-engine sound generation unit 116 are the same as those according to the first embodiment, and therefore description of details thereof will be omitted.

The gear ratio calculation unit 117 acquires the signal of the shift position sensor 46. From the signal of the shift position sensor 46, a shift position of the shifter 58 is obtained. The gear ratio of the transmission 10 is mechanically uniquely specified for each shift position. The gear ratio calculation unit 117 calculates a gear ratio corresponding to the current shift position using a correspondence table that is prepared beforehand. For the calculation of the virtual engine speed by the virtual engine speed calculation unit 113, the gear ratio of the actual transmission 10 calculated by the gear ratio calculation unit 117 is used.

The virtual clutch torque calculation unit 118 calculates the virtual clutch torque using the virtual engine torque calculated by the virtual engine torque calculation unit 114 and the virtual clutch capacity calculated by the virtual clutch capacity calculation unit 112. When the virtual engine torque is lower than the virtual clutch capacity, the virtual clutch torque calculation unit 118 outputs the virtual engine torque as the virtual clutch torque. On the other hand, when the virtual engine torque is higher than the virtual clutch capacity, the virtual clutch torque calculation unit 118 outputs a virtual clutch torque that is restricted to the virtual clutch capacity. The controller 102 controls the inverter 4 such that the torque output by the electric motor 6 changes according to the virtual clutch torque.

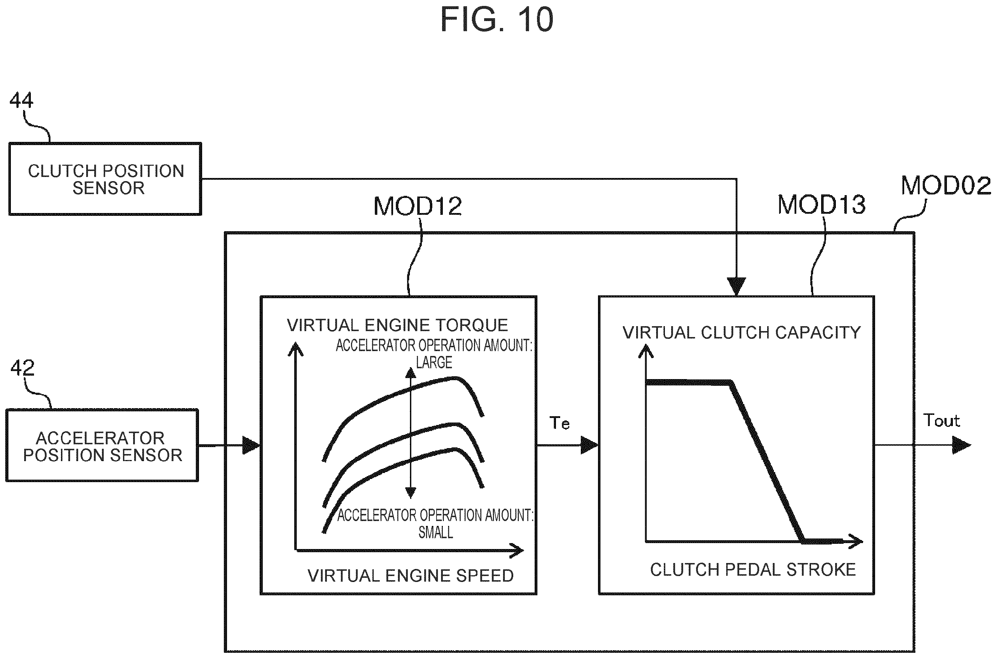

In this embodiment, a vehicle model MOD02 shown in FIG. 10 is used in the controller 102. The vehicle model MOD02 is composed of the engine model MOD12 and the clutch model MOD13. The controller 102 makes the electric motor 6 output the virtual clutch torque Tout calculated in the clutch model MOD13. The transmission 10 increases the virtual clutch torque Tout input from the electric motor 6 according to the gear ratio. The engine model MOD12 and the clutch model MOD13 are the same as those according to the first embodiment, and therefore description of details thereof will be omitted.

Also in this embodiment, switching the clutch capacity characteristic of the clutch model MOD13 according to the situation can optimize the change characteristic of the torque relative to an operation of the pseudo-clutch pedal 54 according to the situation. With the first high-speed characteristic CHARC1, a quick rise of the torque in response to an operation of the pseudo-clutch pedal 54 allows the driver to feel a direct response to the operation. With the low-speed characteristic CHARC2, a rise of the torque in response to an operation of the pseudo-clutch pedal 54 is restrained, which can make a half-clutch operation at the time of starting easier. With the second high-speed characteristic CHARC3, the speed of increase in the virtual engine speed during downshifting is restrained, which can mitigate surge shock accompanying engine braking.

Next, the configuration of a power system of a vehicle in another embodiment of the disclosure will be described. In the above-described first and second embodiments, the accelerator pedal 52 and the accelerator position sensor 42 constitute a first indicator that outputs a continuous indication according to the operation amount of the accelerator pedal 52 to the controller 101. While the accelerator pedal 52 is a foot-operated pedal-type operating tool, a hand-operated lever-type operating tool may be used as the first indicator.

In the above-described first and second embodiments, the pseudo-clutch pedal 54 and the clutch position sensor 44 constitute a second indicator that can be simultaneously operated with the pseudo-clutch pedal 54 and outputs a continuous indication according to the operation amount of the pseudo-clutch pedal 54 to the controller 101. While the pseudo-clutch pedal 54 is a foot-operated pedal-type operating device, a hand-operated lever-type operating tool or a dial-type operating tool may be used as the second indicator. However, the second indicator is required to be operable by the foot or the hand different from the foot or the hand that operates the first indicator.

In the above-described first embodiment, the pseudo-shifter 56 and the shift position sensor 46 constitute a third indicator that outputs a discrete indication for each operation of the pseudo-shifter 56 to the controller 101. In the above-described second embodiment, the shifter 58 and the shift position sensor 46 constitute a third indicator that outputs a discrete indication for each operation of the shifter 58 to the controller 101. While the pseudo-shifter 56 and the shifter 58 are shifters of which each operation is uniquely associated with a shift position, a relative indication-type shifter, such as a sequential shifter, may be used as the third indicator. The sequential shifter may have, for example, a structure resembling a shift stick provided in a console, or a structure resembling a shift paddle mounted on a steering wheel.

In the above-described first and second embodiments, hysteresis may be provided for a threshold of the vehicle speed at which switching of the clutch capacity characteristic is performed. Specifically, as the threshold value of the vehicle speed, a first speed (e.g., 5 km/h) and a second speed (e.g., 10 km/h) are set. In this case, when the vehicle speed has increased from below the first speed to the first speed or above, the clutch capacity characteristic should be maintained as the first high-speed characteristic CHARC1 until the vehicle speed becomes lower than the second speed. When the vehicle speed has decreased from the second speed or above to below the second speed, the clutch capacity characteristic should be maintained as the low-speed characteristic CHARC2 until the vehicle speed becomes equal to or higher than the first speed.

In the above-described first and second embodiments, the relationship specified by the clutch model MOD13 is not limited to the relationship between the clutch pedal stroke and the virtual clutch capacity. For example, instead of the clutch pedal stroke, a clutch angle measured by a clutch angle sensor may be used. Instead of the virtual clutch capacity, a torque transmission gain of the virtual clutch may be used.

The torque control technology of the disclosure can be widely applied to any electric vehicles that use an electric motor as a motive power device for traveling, without being limited to battery electric vehicles (BEVs). For example, it is possible to apply the torque control technology of the disclosure to hybrid electric vehicles (HEVs) and plug-in hybrid electric vehicles (PHEVs) that have a mode of traveling on a drive force of an electric motor alone. It is also possible to apply the torque control technology of the disclosure to fuel cell electric vehicles (FCEVs) that supply electric energy generated by a fuel cell to an electric motor.

## Claims

1. A battery electric vehicle (100; 200) comprising:
an electric motor (6) as a drive source;
a controller (101; 102) configured to control a torque output by the electric motor (6);
a first indicator (42, 52) configured to output a continuous indication according to an operation amount to the controller (101; 102); and
a second indicator (44, 54) that is operable simultaneously with the first indicator (42, 52) and configured to output a continuous indication according to an operation amount to the controller (101; 102), wherein:
the controller (101; 102) is configured to, in a state where the second indicator (44, 54) is not being operated, make the electric motor (6) output a basic torque according to an operation amount of the first indicator (42, 52) and a vehicle speed;
the controller (101; 102) is configured to, when an operation amount of the second indicator (44, 54) is equal to or larger than a first operation amount, make the electric motor (6) output a predetermined minimum torque;
the controller (101; 102) is configured to, when an operation amount of the second indicator (44, 54) is smaller than the first operation amount, increase the torque from the minimum torque to the basic torque according to a decrease in the operation amount of the second indicator (44, 54);
the controller (101; 102) is configured to switch a change characteristic of the torque between a high-speed characteristic that is selected when the vehicle speed is equal to or higher than a predetermined speed and a low-speed characteristic that is selected when the vehicle speed is lower than the predetermined speed, the change characteristic of the torque being the change characteristic relative to an operation amount of the second indicator (44, 54) when the operation amount of the second indicator (44, 54) is reduced to be smaller than the first operation amount;
the high-speed characteristic is a characteristic such that, while the torque increases from the minimum torque to the basic torque, an interval appears where a change in the torque in response to a change in an operation amount of the second indicator (44, 54) becomes convex upward; and
the low-speed characteristic is a characteristic such that a change in the torque while the torque increases from the minimum torque to the basic torque becomes convex downward in response to a change in an operation amount of the second indicator (44, 54) or the change is linear compared with that in the high-speed characteristic.

2. The battery electric vehicle (100; 200) according to claim 1, wherein:
the controller (101; 102) is configured to, in a case where the basic torque is a predetermined upper limit torque, when an operation amount of the second indicator (44, 54) is equal to or smaller than a second operation amount that is smaller than the first operation amount, make the electric motor (6) output the upper limit torque;
the controller (101; 102) is configured to, when an operation amount of the second indicator (44, 54) is smaller than the first operation amount and larger than the second operation amount, increase the torque from the minimum torque to the upper limit torque according to a decrease in the operation amount of the second indicator (44, 54);
the high-speed characteristic is a characteristic such that, while an operation amount of the second indicator (44, 54) changes from the first operation amount to the second operation amount, an interval appears where a change in the torque in response to a change in the operation amount of the second indicator (44, 54) becomes convex upward; and
the low-speed characteristic is a characteristic such that, while an operation amount of the second indicator (44, 54) changes from the first operation amount to the second operation amount, the torque changes from the minimum torque to the upper limit torque so as to become convex downward or the torque is linear compared with that in the high-speed characteristic.

3. The battery electric vehicle (100; 200) according to claim 1 or 2, wherein the high-speed characteristic is a characteristic such that, as an operation amount of the second indicator (44, 54) decreases to be smaller than the first operation amount, the torque changes so as to become convex downward and then changes so as to become convex upward.

4. The battery electric vehicle (100; 200) according to any one of claims 1 to 3, **characterized in that** the controller (101; 102) is configured to, in a state where the second indicator (44, 54) is being operated, even when the vehicle speed has increased from below the predetermined speed to the predetermined speed or above, and even when the vehicle speed has decreased from the predetermined speed or above to below the predetermined speed, not perform the switching of the change characteristic.

5. The battery electric vehicle (100; 200) according to any one of claims 1 to 4, wherein:
the predetermined speed includes a first speed and a second speed lower than the first speed;
the controller (101; 102) is configured to, when the vehicle speed has increased from below the first speed to the first speed or above, maintain the change characteristic as the high-speed characteristic until the vehicle speed becomes lower than the second speed; and
the controller (101; 102) is configured to, when the vehicle speed has decreased from the second speed or above to below the second speed, maintain the change characteristic as the low-speed characteristic until the vehicle speed becomes equal to or higher than the first speed.

6. The battery electric vehicle (200) according to any one of claims 1 to 5, further comprising a third indicator (46, 58) configured to output a discrete indication for each operation to the controller (102), wherein:
the controller (102) is configured to switch a relationship among an operation amount of the first indicator (42, 52), the vehicle speed, and the basic torque among a plurality of prespecified relationships according to an operation of the third indicator (46, 58); and
the controller (102) is configured to, when, while the vehicle speed is equal to or higher than the predetermined speed, the second indicator (44, 54) is operated to the first operation amount or more and the third indicator (46, 58) is operated so as to increase the basic torque, make a change rate of the torque lower than a change rate in the high-speed characteristic, the change rate being the change rate relative to an operation amount of the second indicator (44, 54) when the operation amount of the second indicator (44, 54) is reduced to be smaller than the first operation amount.

7. The battery electric vehicle (200) according to any one of claims 1 to 6, further comprising a transmission (10) that is configured to change a gear ratio between the electric motor (6) and a drive wheel, wherein the controller (102) is configured to, when, while the vehicle speed is equal to or higher than the predetermined speed, the second indicator (44, 54) is operated to the first operation amount or more and the transmission (10) is downshifted, make a change rate of the torque lower than a change rate in the high-speed characteristic, the change rate being the change rate relative to an operation amount of the second indicator (44, 54) when the operation amount of the second indicator (44, 54) is reduced to be smaller than the first operation amount.

8. A control method of a battery electric vehicle (200), the battery electric vehicle (200) including: an electric motor (6) as a drive source, a first indicator (42, 52) configured to output a continuous indication according to an operation amount, and a second indicator (44, 54) that is operable simultaneously with the first indicator (42, 52) and configured to output a continuous indication according to an operation amount, the control method of the battery electric vehicle (200) comprising:
controlling a torque output by the electric motor (6);
in a state where the second indicator (44, 54) is not being operated, making the electric motor (6) output a basic torque according to an operation amount of the first indicator (42, 52) and a vehicle speed;
when an operation amount of the second indicator (44, 54) is equal to or larger than a first operation amount, making the electric motor (6) output a predetermined minimum torque;
when an operation amount of the second indicator (44, 54) is smaller than the first operation amount, increasing the torque from the minimum torque to the basic torque according to a decrease in the operation amount of the second indicator (44, 54); and
switching a change characteristic of the torque between a high-speed characteristic that is selected when the vehicle speed is equal to or higher than a predetermined speed and a low-speed characteristic that is selected when the vehicle speed is lower than the predetermined speed, the change characteristic being the change characteristic relative to an operation amount of the second indicator (44, 54) when the operation amount of the second indicator (44, 54) is reduced to be smaller than the first operation amount, wherein
the high-speed characteristic is a characteristic such that, while the torque increases from the minimum torque to the basic torque, an interval appears where a change in the torque in response to a change in an operation amount of the second indicator (44, 54) becomes convex upward, and
the low-speed characteristic is a characteristic such that a change of the torque while the torque increases from the minimum torque to the basic torque becomes convex downward in response to a change in an operation amount of the second indicator (44, 54) or the change is linear compared with that in the high-speed characteristic.
